# EUROPEAN PATENT SPECIFICATION

(11) **EP 2 713 238 B1**
(45) Date of publication and mention of the grant of the patent: **26.11.2014**
(21) Application number: 12186789.9
(22) Date of filing: 01.10.2012
(51) Int. Cl.: G06F 1/26, H04N 7/18

(54) **Power management in a monitoring camera.**
Leistungsverwaltung in einer Überwachungskamera
Gestion de l'alimentation dans une caméra de surveillance

(43) Date of publication of application: 02.04.2014
(73) Proprietor: Axis AB, 223 69 Lund (SE)
(72) Inventor: Kannermark, Per, SE-212 28 Malmö (SE); Nilsson, Andreas, SE-261 72 Häljarp (SE)
(74) Representative: Valea AB

(56) References cited:
- EP-A1- 2 177 970
- WO-A1-94/03014
- US-A1- 2008 052 546
- US-A1- 2012 051 714

## Description

### TECHNICAL FIELD

Embodiments herein relates generally to a monitoring camera and a method therein. In particular it relates to saving power in the monitoring camera.

### BACKGROUND

Monitoring cameras are installed in various places today. Monitoring cameras are installed both indoor and outdoor as well as on permanent and temporary installations. Depending on where a monitoring camera is installed and depending on the conditions under it is to be operated, there will be a very large variation with regard to the image processing capabilities that are required of the camera. For example, monitoring of a location in which during daytime images of a large number of passing objects are to be processed requires much image processing power. This contrasts to a situation where the same location is monitored during night time when no objects are passing in the field of view of the camera. Moreover, due to the fact that image detectors/sensors become more and more refined, and deliver ever increasing flows of image data, the requirements on the processing power of monitoring cameras will continue to increase. Such an increased need for processing power will typically be associated with increased electric power consumption in the camera.

Power consumption is always an issue in all electronic products including monitoring cameras. There are several reasons for that, such as environmental reasons but there are also other reasons. One such reason could be when a large number of cameras are installed on a temporary basis, e.g. monitoring a sports event. In this case it could be costly to make a proper installation of electrical power from the power grid. One solution to this problem would be to use Power over Ethernet, PoE, which has a limited maximum power output. Another example of when the power consumption would be an issue could also be because the heat the image processing circuitry create cannot be taken care of and, as a consequence, the processing circuitry cannot be used the way it is needed to process the image.

In other words, there are several scenarios where the power supplied to the monitoring camera will be insufficient to handle all processing requirements in the monitoring camera. For example, with regard to the example of PoE, there are different classes of PoE and in some situations the monitoring camera has too low class to be able to deal with what is happening in the scene monitored by the monitoring camera. For example, having the monitoring camera at home a lot of the times nothing happens, and a low class of PoE is may be used. However, when something happens you want to be able to use a high amount of effect, which you probably will not have with a low class of PoE.

WO 94/03014 A1 describes a low power video security monitoring system. When motion is detected by a video camera the system establishes a connection with a video monitoring facility and transmits compressed video images to the facility.

EP 2177970 A1 describes power management in an electronic device. The device comprises a flash unit and a camera. A battery level is measured before a decision is made whether or not to utilize the flash when taking a photograph.

### SUMMARY

It is therefore an object of the present invention to at least mitigate drawbacks associated with processing power requirements in relation to a limited power supply in a monitoring camera.

Hence, according to a first aspect there is provided a method for controlling a monitoring camera. The monitoring camera is connected to an external power source. The external power source has an external maximum power level. Image data is being processed in a first processing state. The monitoring camera detects an event and determines a type of the detected event. An amount of energy in an energy accumulator is determined in the monitoring camera. Based on the type of the event and based on the external maximum power level and based on the determined amount of energy in the energy accumulator, a second processing state is determined. The second processing state requires a power level that is higher than the external maximum power level. Image data is then processed in the second processing state.

In other words, such a method has an effect in that it enables a monitoring camera having a limited electric power supply to perform high performance image processing that requires an electric power level that exceeds the limited power supply level. An advantage is therefore that the processing capacity of the monitoring camera can be increased above the limit corresponding to an electric power limit that a power supply normally can provide.

Energy is provided to the energy accumulator at a power level corresponding to the difference between the external maximum power level and a power level of the first processing state, and discontinuing the provision of energy to the energy accumulator as a consequence of the detection of the event.

This enables re-charging of an energy accumulator during periods when the monitoring camera does not need all available power that can be provided by the external power source. An advantage of this is that the service intervals relating to battery replacement can be extended.

Since the monitoring camera is able to use power from both an external power source and from the power accumulator, the monitoring camera is able to do more processing and thereby increase the quality of the image data when needed.

Embodiments include those that comprise obtaining a time interval that is required for the second processing state, and wherein determining the second processing state is further based on the time interval. In such embodiments, the time interval can be based on the type of the detected event.

The determination of the second processing state can in some embodiments comprise calculating the time interval for the second processing state by dividing the amount of energy in the energy accumulator by the difference between the power level required for the second processing state and the external maximum power level.

That is, some embodiments enable optimization of the amount image processing that can be performed as a consequence of the event detection.

Some embodiments are such that the detection of an event comprises detection of motion in a scene that is being monitored, e.g. by identifying motion in the image data.

Embodiments include those where the determination of the type an event comprises detecting a predetermined object type in the image data.

Embodiments include those where the first processing state comprises processing image data according to any first frame rate, noise filtering level, tone mapping level, sharpening level, color correction level, artifact reduction level, and wherein the second processing state comprises processing image data according to any second frame rate, noise filtering level, tone mapping level, sharpening level, color correction level, artifact reduction level, being lower than the corresponding first rate and level.

According to a second aspect there is provided a monitoring camera corresponding to the method.

According to a third aspect there is provided a computer program product loadable into a memory of a computerized device and comprising software code portions adapted for performing the method as summarized above.

The effects and advantages of the second and third aspects correspond to those summarized above in connection with the first aspect.

### BRIEF DESCRIPTION OF THE DRAWINGS

Examples of embodiments herein are described in more detail with reference to attached drawings in which:
figure 1 is a schematic block diagram illustrating a monitoring camera;
figures 2a and 2b are flowcharts depicting embodiments of a method in the monitoring camera; and
figure 3 is a diagram illustrating the power consumption of the monitoring camera.

### DETAILED DESCRIPTION

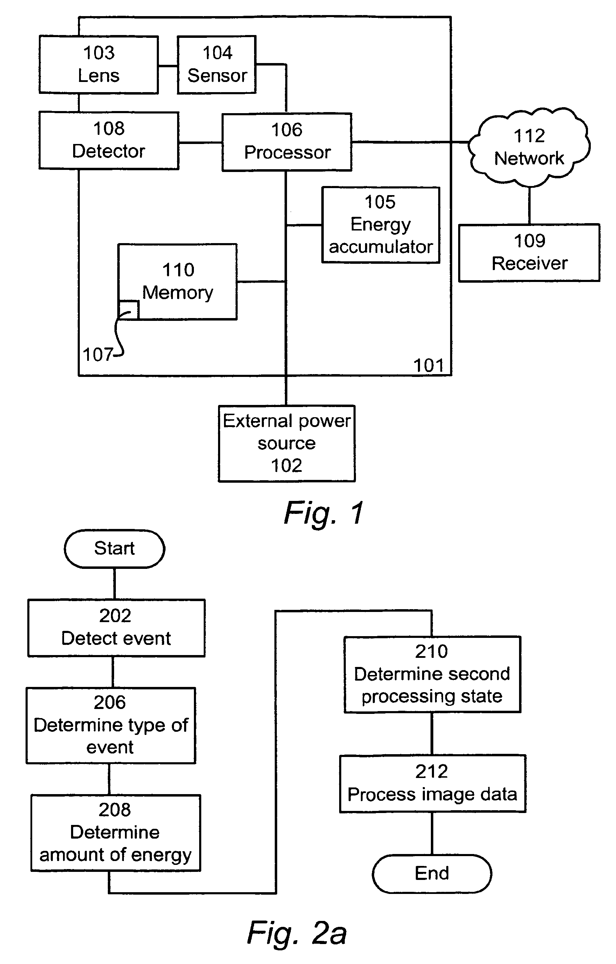

Figure 1 illustrates a block diagram according to embodiments of the invention. A monitoring camera 101 is adapted to monitor a scene, not illustrated in the figure. The monitoring camera 101 may be a permanent monitoring camera or installed on temporary basis as described in the background.

The camera 101 can be any suitable digital camera capable of generating video sequences and communicating the video sequences, or other type of image data, such as image and video metadata, over a network 112 to any entity connected to the network, such as an image data receiver 109. The camera 101 comprises a lens system 103 for collecting incident light, an image sensor 104, for example in the form of a charge coupled device, CCD, a CMOS-sensor or similar sensor, for registering incident light, as well as circuitry as is known in the art. For example, the circuitry typically includes image processing circuitry that comprises an image/video encoder (implemented in hardware, software, or any combination thereof) that form part of a processing unit 106 that manages, for example video analytics, memory 110, and network interface circuitry (not shown) for connection to the network 112. The image processing unit 106 comprising the image/video encoder is arranged to encode captured digital image data into any one of a plurality of known formats for continuous video sequences, for limited video sequences, for still images or for streamed images/video. For instance, the image data may be encoded into MPEG1, MPEG2, MPEG4, H.264, JPEG, M-JPEG, bitmapped, etc. Moreover, the image data may be processed by using techniques such as noise filtering, tone mapping, sharpening, color correction and artifact reduction. As will be discussed below these processing techniques typically involve complex processing tasks and as such makes the load on the processor 106 higher than during performance of simple tasks, and thereby increase the power consumption of the monitoring camera 101. The controller 106 may also comprise analytics circuits and software to detect motion or objects in the image data.

Software instructions 107stored in the memory 110 are configured to control the camera 101 and its interaction with any other entities connected via the network 112 and implement, when executed by the processor 106 and in combination with the hardware units, embodiments of the methods described herein.

The monitoring camera 101 is supplied with electrical power from an external power source 102. The power may be supplied by means of power over Ethernet, PoE, universal serial bus, USB, or from any other appropriate power source known to the skilled person. The power supplied by the external power source 102 is limited by an upper bound. This upper bound will be called external maximum power level in this disclosure.

The monitoring camera 101 comprises or may be connected to an energy accumulator 105. The energy accumulator 105 is adapted to store electrical energy which may be used by the monitoring camera 101 when needed. The energy accumulator 105 may be built in the monitoring camera 101 or may be connected to the monitoring camera 101. The energy accumulator may be either chargeable or non-chargeable. Examples of energy accumulators 105 may be a battery, a capacitor etc. The energy accumulator 105 may hold different amounts of electrical energy depending on how fully charged it is. The electrical power from the energy accumulator 105 may be added to the electrical power provided from the external power source 102 such that the total amount of electrical power supplied to the monitoring camera 101 is higher than the external maximum power level. If the energy accumulator 105 is chargeable, it may be charged with electrical power from the monitoring camera 101 when the power consumption of the camera 101 is less than the external maximum power level. When the power consumption of the monitoring camera 101 is higher than the external maximum power level, the monitoring camera 101 may use power from the energy accumulator 105, and the amount of energy in the energy accumulator 105 will decrease. How this works in more detail will be described below.

A detector 108 is included in or connected to the monitoring camera 101. The detector 108 may be any suitably configured detector for detecting changes in an environment in which the camera 101 is located. For example, the detector 108 can be a motion detector of, e.g., an infra-red, IR, type or simply a sensor connected to a door close to or in the scene monitored by the monitoring camera 101. When the door opens the motion detector 108 transmits a signal to the monitoring camera 101 indicating that there will be or is motion in the scene. The motion detector 108 may also be a more or less remote sensing device and be placed outside the scene monitored by the monitoring camera 101. Other examples of a detector include a timer, an ambient light detector etc.

As described above the image data from the sensor 104 may be processed such that it is enhanced in the processor 106. The processor 106 may decide if the image data may be sent to the receiver 109 or not. This can be decided in a variety of ways. One way is to check for motion in the scene, and if there is no motion in the scene no image data is sent to the receiver 109. The receiver 109 may e.g. be a control station, a server or any other node for handling the image data from the monitoring camera 101. In the case with PoE the receiver 109 may be the same as the external power source 102.

Instead of sending the image data to the receiver 109, the image data may be stored on an image memory 110 and sent to the receiver 109 later. The image memory may be of any suitable type, such as a hard disk, optical storage or flash memory etc.

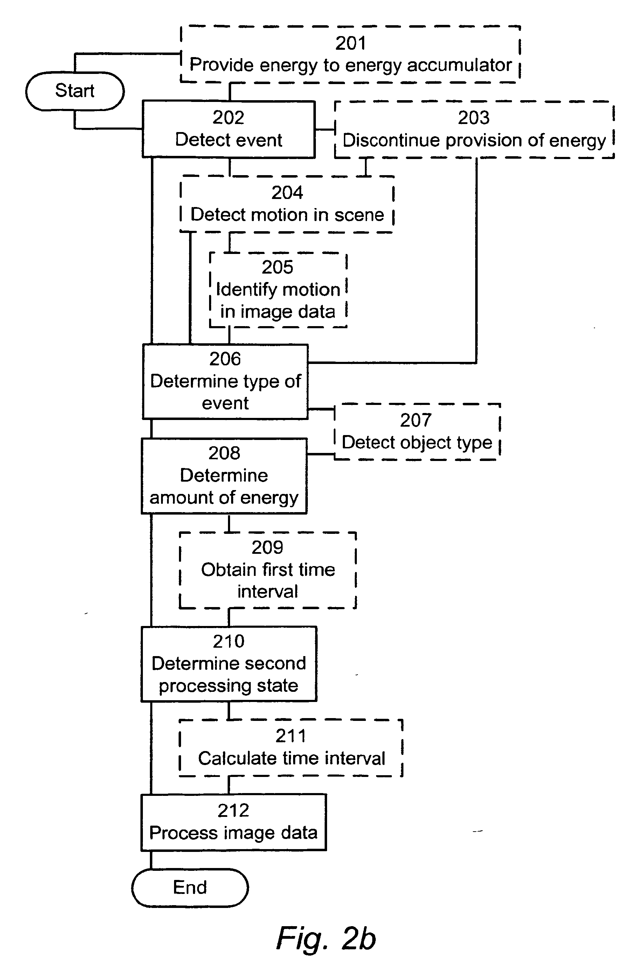

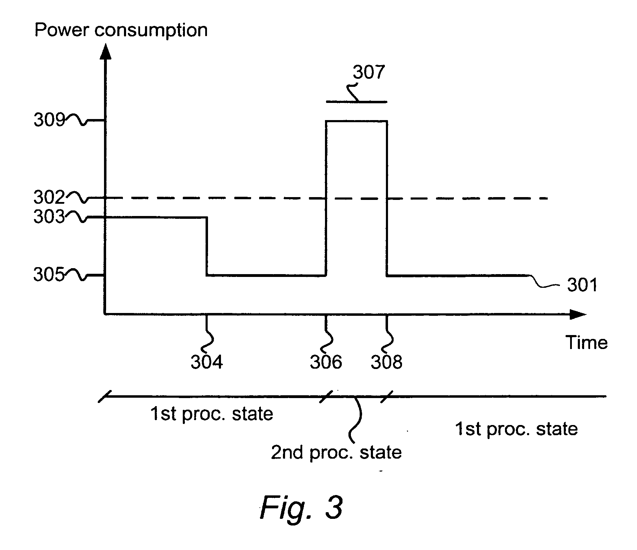

Embodiments of a method in the monitoring camera 101 for improving the control and power management of the monitoring camera 101 will now be described with reference to the flowchart depicted in figures 2a, 2b and figure 3 illustrating a diagram showing the power consumption 301 of the monitoring camera 101, and with continued reference to figure 1 The method comprises the following actions, which actions may be carried out in the described order as well as in other orders than described below. The actions may also be combined.

The method describes a way of controlling the monitoring camera 101. The monitoring camera 101 is connected to the external power source 102 having an external maximum power level 302. The camera 101 can be monitoring a scene, whereby image data is processed in a first processing state. More information about the first processing state will be described below.

The method can be embodied in a method as illustrated in figure 2a where the monitoring camera detects 202 an event and determines 206 a type of the detected event. An amount of energy in an energy accumulator is determined 208 in the monitoring camera. Based on the type of the event and based on the external maximum power level and based on the determined amount of energy in the energy accumulator, a second processing state is determined 210. The second processing state requires a power level that is higher than the external maximum power level. Image data is then processed 212 in the second processing state.

A more detailed illustration of embodiments of the invention is illustrated in figure 2b, where initially, the monitoring camera 101 is monitoring the scene. The controller determines that nothing of interest happens in the scene at the moment, i.e. no events are occurring. Details regarding how this is determined are known to the skilled person. The monitoring camera 101 is now in the first processing state and the power consumption 301 is below the external maximum power level 302. In this example the power consumption 301 of the monitoring camera is at a first power level 303. The first power level 303 is lower than or equal to the external maximum power level 302. When the monitoring camera 101 is in the first processing state, the monitoring camera 101 is performing a certain amount of processing of image data. This could for example mean a specific frame rate or level of noise filtering or sharpening etc. at which the monitoring camera 101 is recording.

At a first time instant 304 it is determined that the quality of the image data may be reduced in order to lower the power consumption 301 of the monitoring camera 101. A reason for this can e.g. be that it is determined that nothing of importance is occurring in the scene. The power consumption 301 of the monitoring camera 101 is then lowered to a second power level 305, while still being in the first processing state. In order to lower the power consumption 301 the monitoring camera 101 may e.g. reduce the frame rate, adjust a noise filtering level, adjust a tone mapping level, adjust a sharpening level, adjust a color correction level or adjust an artifact reduction level.

When the power consumption is lowered energy may be provided to the energy accumulator 105 at a power level corresponding to the difference between the external maximum power level 302 and the power level of the first processing state, as illustrated by an energy provision step 201. The power level of the first processing state may e.g. be the first power level 303 or the second power level 305.

The energy accumulator 105 is charged slowly over time. The reason why the charging should be made slowly over time is to make sure that it does not require too much power during charging.

At a second instant 306 an event is detected 202. The detected event may be several different kinds of event. Below a number of non-limiting examples will be provided. The event indicates that something has happened in the monitored scene that requires more processing power and thereby a higher power consumption 301 level in the monitoring camera 101 that is higher than the external maximum power level 302.

Typically, the event is something of importance that happens in the scene. However, it is also possible that the monitoring camera 101 receives a signal that triggers the event without anything specific happening in the monitored scene. In other words, the event triggering signal may be induced by a user and the signal may be received via a cable or via a wireless interface. For example, the event can be a timer that lapses, a timer that indicates that a specific time of day is reached, a detection that the ambient light is at a specific level, i.e. sunrise/sunset detection, etc.

If electrical power is provided to the energy accumulator 105 when the power consumption 301 is lower than the external maximum level 302, the provision of energy to the energy accumulator 105 is discontinued 203 as a consequence of the detection of the event.

As described in relation to action 202, the event may be that motion is detected 204 in the scene. Motion may be detected in the scene by receiving a signal from a detector in the form of a motion detector 108 as described in relation to figure 1.

The event may be detected by the monitoring camera 101 by identifying 205 motion in the image data. Motion in the image data may be identified by any appropriate motion detection algorithm/process known in the art.

A type of the detected event is determined 206. Non-limiting examples of event types include the event that a door opens in the scene. Another event type may be that a car passes through the scene monitored by the monitoring camera 101. Further examples, as mentioned above, include timer generated events and ambient light changes. The monitoring camera 101 will react differently depending on which event type that is detected. This will be described below in relation to action 210.

The monitoring camera 101 may detect 207 a predetermined object type in the image data. The object type may be a single object as well as a group of objects that may be identified in the scene. An example of an object type may be a face of a person, a vehicle number plate, a rising or setting sun etc.

The amount of energy in the energy accumulator 105 in the monitoring camera 101 is determined 208. How this is performed is well known to the skilled person and include more or less complex detection means and algorithms.

In some embodiments a time interval 307 is obtained 209 that is required for a second processing state. The determining of the second processing state may further be based on the time interval 307. In some embodiments it is determined that the monitoring camera 101 should monitor the scene between the second time instant 306 and a third time instant 308. In these embodiments the power consumption 301 of the monitoring camera 101 increases from a level, lower than the external maximum power level 302 to a third power level 309. The power consumption 301 of the monitoring camera 101 may be increased from the first power level 303 or from the second power level 305.

The time interval 307 may be based on the type of the detected event. For example if the detected event is that a door is opened in the scene, it may be determined that the scene should be monitored long enough to identify the person walking through the door.

Based on the type of the event, on the external maximum power level 302 and on the determined amount of energy in the energy accumulator 105 the second processing state is determined 210. The power level of the second processing state is higher than the external maximum power level 302. The power level of the second processing state may e.g. be the third power level 309.

In the second processing state, energy is provided to from both the external power source 102 and from the energy accumulator 105. This increased amount of power may be used to increase the quality of the image data and thus enhance the experience of the user watching the image data. In the first processing state image data may, e.g., be processed at a first frame rate or noise filtering level or tone mapping level or sharpening level or color correction level or artifact reduction level. Details regarding noise filtering, or tone mapping, sharpening, color correction, artifact reduction and other examples of types of processing are known in the art and therefore not described in detail here.

The second processing state comprises processing image data at a second frame rate or noise filtering level or tone mapping level or sharpening level or color correction level or artifact reduction level. The second frame rate or noise filtering level or tone mapping level or sharpening level or color correction level or artifact reduction level is better than the first frame rate or noise filtering level or tone mapping level or sharpening level or color correction level or artifact reduction level. In this way the experience of the user watching the image data is increased.

How the image data is processed in the second processing state may also depend on conditions in the scene. If the conditions are bad, e.g. if it is foggy or dark, more processing is required in the second processing state to increase the quality of the image data.

The image quality in the first processing state may be enough for the monitoring camera 101 to detect the event in the scene. While in the second processing state, the image quality may high enough to identify objects in the scene.

The time interval 307 for the second processing state may be calculated 211 by dividing the amount of energy in the energy accumulator 105 by the difference between the power level required for the second processing state 309 and the external maximum power level 302. The power level required for the second processing state 309 may e.g. be the third power level 309.

Image data is processed 212 in the second processing state. The image data may then be saved on the image memory 110 or sent to the receiver 109.

As indicated in figure 2b, a number of method steps 201, 203, 204, 205, 207, 209 and 211 are illustrated with dashed lines. This is to indicate that these steps are optional and that they can be combined in any number and in any appropriate manner and thereby define various embodiments of the method as defined by the steps 202, 206, 208, 210 and 212. An embodiment of a monitoring camera that corresponds to the method is the camera 101 in figure 1. The monitoring camera 101 is configured to be connected to the external power source 102. The external power source 102 is limited to the external maximum power level 302. The monitoring camera 101 is configured to monitor the scene, whereby image data is being processed in the first processing state. The monitoring camera 101 comprises control circuitry 106 and memory circuitry 107. The control circuitry 106 and memory circuitry 107 is configured to detect the event and determine the type of the detected event. The control circuitry 106 and memory circuitry 107 is further configured to determine the amount of energy in the energy accumulator 105 in the monitoring camera 101. Based on the type of the event and based on the external maximum power level 302 and based on the determined amount of energy in the energy accumulator 105, a second processing state is determined. The power level of the second processing state 309 is higher than the external maximum power level 302. Image data is then processed in the second processing state.

The embodiments herein for controlling the monitoring camera 101 may be implemented through one or more processors in the controller 106, in the monitoring camera 101, together with computer program code for performing the functions and actions of the embodiments herein. The program code mentioned above may also be provided as a computer program product, for instance in the form of a data carrier carrying computer program code for performing the embodiments herein when being loaded into the electronic device 101. One such carrier may be in the form of a CD ROM disc. It is however feasible with other data carriers such as a memory stick. The computer program code may furthermore be provided as pure program code on a server and downloaded to the monitoring camera 101.

The monitoring camera 101 may comprise the memory circuitry 107 comprising one or more memory units. The memory circuitry 107 is arranged to be used to store data, received data streams, received information, configurations, schedules, and applications to perform the methods herein when being executed in the monitoring camera 101.

Those skilled in the art will also appreciate that the controller 106 and the memory circuitry 107 described above may refer to a combination of analog and digital circuits, and/or one or more processors configured with software and/or firmware, e.g. stored in a memory, that when executed by the one or more processors. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

When using the word "comprise" or "comprising" it shall be interpreted as non-limiting, i.e. meaning "consist at least of".

The embodiments herein are not limited to the above-described preferred embodiments. Various alternatives, modifications and equivalents may be used. Therefore, the embodiments should not be taken as limiting the scope of the invention, which is defined by the appended claims.

## Claims

1. A method for controlling a monitoring camera (101), the monitoring camera (101) being connected to an external power source (102) having a predetermined external maximum power level (302) known to the camera, whereby image data is being processed in a first processing state requiring a power level (303, 305) that is lower than or equal to the predetermined external maximum power level, the method comprising:
providing (201) energy to an energy accumulator (105) at a power level corresponding to the difference between the external maximum power level (302) and the power level (303, 305) of the first processing state, and
detecting (202) an event,
discontinuing (203) the provision of energy to the energy accumulator (105) as a consequence of the detection of the event,
determining (206) a type of the detected event,
determining (208) an amount of energy in the energy accumulator (105) in the monitoring camera (101),
determining (210) based on the type of the event and based on the external maximum power level (302) and based on the determined amount of energy in the energy accumulator (105), a second processing state requiring a power level (309) that is higher than the external maximum power level (302), wherein the determination of the second processing state comprises calculating (211) a time interval (307) for the second processing state by dividing the amount of energy in the energy accumulator (105) by the difference between the power level required for the second processing state (309) and the external maximum power level (302), and
processing (212) image data in the second processing state.

2. The method according to claim 1, wherein the time interval (307) is based on the type of the detected event.

3. The method according to any of claims 1-2, wherein the detection of an event comprises
detecting (204) motion in a scene being monitored.

4. The method according to claim 3, wherein the detection of motion comprises
identifying (205) motion in the image data.

5. The method according to any of claims 1-4, wherein the determination of the type an event comprises
detecting (207) a predetermined object type in the image data.

6. The method according to any of claims 1-5, wherein the first processing state comprises processing image data according to any first:
frame rate,
noise filtering level,
tone mapping level,
sharpening level,
color correction level,
artifact reduction level, and
wherein the second processing state comprises processing image data according to any second:
frame rate,
noise filtering level,
tone mapping level,
sharpening level,
color correction level,
artifact reduction level, being lower than the corresponding first rate and level.

7. A monitoring camera (101) configured to be connected to an external power source (102) having a predetermined external maximum power level (302) known to the camera, configured to process image data in a first processing state requiring a power level (303, 305) that is lower than or equal to the predetermined external maximum power level, the monitoring camera (101) comprising circuitry (104, 106, 108, 110) configured to:
provide energy to an energy accumulator (105) at a power level corresponding to the difference between the external maximum power level (302) and the power level (303, 305) of the first processing state
detect an event,
discontinue the provision of energy to the energy accumulator (105) as a consequence of the detection of the event,
determine a type of the detected event,
determine an amount of energy in the energy accumulator (105) in the monitoring camera (101),
determine based on the type of the event and based on the external maximum power level (302) and based on the determined amount of energy in the energy accumulator (105), a second processing state requiring a power level (309),that is higher than the external maximum power level (302), wherein the determination of the second processing state comprises calculating a time interval (307) for the second processing state by dividing the amount of energy in the energy accumulator (105) by the difference between the power level required for the second processing state (309) and the external maximum power level (302), and
process image data in the second processing state.

8. A computer program product loadable into a memory of a computerized monitoring camera suitable for performing the steps of the method of any one of claims 16.

## Patentansprüche

1. Verfahren zum Steuern einer Überwachungskamera (101), wobei die Überwachungskamera (101) an eine externe Energiequelle (102) mit einem im Voraus bestimmten, der Kamera bekannten maximalen Leistungspegel (302), wobei Bilddaten in einem ersten Verarbeitungszustand verarbeitet werden, der einen Leistungspegel (303, 305) erfordert, der niedriger als oder gleich groß wie der im Voraus bestimmte externe maximale Leistungspegel ist, wobei das Verfahren Folgendes aufweist:
Bereitstellen (201) von Energie an einen Energiespeicher (105) mit einem Leistungspegel entsprechend der Differenz zwischen dem externen maximalen Leistungspegel (302) und dem Leistungspegel (303, 305) des ersten Verarbeitungszustands, und
Erkennen (202) eines Ereignisses,
Unterbrechen (203) des Bereitstellens von Energie an den Energiespeicher (105) infolge der Erkennung des Ereignisses,
Bestimmen (206) eines Typs des erkannten Ereignisses,
Bestimmen (208) einer Menge von Energie im Energiespeicher (105) in der Überwachungskamera (101),
Bestimmen (210), auf Basis des Typs des Ereignisses und auf Basis des externen maximalen Leistungspegels (302) und auf Basis der bestimmten Menge von Energie im Energiespeicher (105), eines zweiten Verarbeitungsstatus, der einen Leistungspegel (309) erfordert, der höher ist als der maximale Leistungspegel (302), wobei das Bestimmen des zweiten Verarbeitungszustands ein Berechnen (211) eines Zeitintervalls (307) für den zweiten Verarbeitungszustand durch Teilen der Menge Energie im Energiespeicher (105) durch die Differenz zwischen dem für den zweiten Verarbeitungszustand (309) erforderlichen Leistungspegel und dem externen maximalen Leistungspegel (302) aufweist, und
Verarbeiten (212) von Bilddaten im zweiten Verarbeitungszustand.

2. Verfahren nach Anspruch 1, wobei das Zeitintervall (307) auf dem Typ des erkannten Ereignisses basiert.

3. Verfahren nach einem der Ansprüche 1 bis 2, wobei das Erkennen eines Ereignisses Folgendes aufweist:
Erkennen (204) einer Bewegung in einer Szene, die überwacht wird.

4. Verfahren nach Anspruch 3, wobei das Erkennen von Bewegung Folgendes aufweist:
Identifizieren (205) von Bewegung in den Bilddaten.

5. Verfahren nach einem der Ansprüche 1 bis 4, wobei das Bestimmen des Typs von Ereignis Folgendes aufweist:
Erkennen (207) eines im Voraus bestimmten Objekttyps in den Bilddaten.

6. Verfahren nach einem der Ansprüche 1 bis 5, wobei der erste Verarbeitungszustand ein Verarbeiten von Bilddaten nach einem ersten von:
Framerate,
Rauschfilterpegel,
Tone-Mapping-Pegel,
Schärfungspegel,
Farbkorrekturpegel,
Artefaktreduktionspegel
aufweist und wobei der zweite Verarbeitungszustand ein Verarbeiten von Bilddaten nach einem zweiten von:
Framerate,
Rauschfilterpegel,
Tone-Mapping-Pegel,
Schärfungspegel,
Farbkorrekturpegel,
Artefaktreduktionspegel,
aufweist, die niedriger sind als die entsprechenden ersten Werte für Rate und Pegel.

7. Überwachungskamera (101), konfiguriert für ein Verbinden mit einer externen Energiequelle (102) mit einem im Voraus bestimmten, der Kamera bekannten maximalen Leistungspegel (302), konfiguriert für ein Verarbeiten von Bilddaten in einem ersten Verarbeitungszustand, der einen Leistungspegel (303, 305) erfordert, der niedriger als oder gleich groß wie der im Voraus bestimmte externe maximale Leistungspegel ist, wobei die Überwachungskamera (101) Schaltkreise (104, 106, 108, 110) aufweist, die für Folgendes konfiguriert sind:
Bereitstellen von Energie an einen Energiespeicher (105) mit einem Leistungspegel entsprechend der Differenz zwischen dem externen maximalen Leistungspegel (302) und dem Leistungspegel (303, 305) des ersten Verarbeitungszustands,
Erkennen eines Ereignisses,
Unterbrechen des Bereitstellens von Energie an den Energiespeicher (105) infolge der Erkennung des Ereignisses,
Bestimmen eines Typs des erkannten Ereignisses,
Bestimmen einer Menge von Energie im Energiespeicher (105) in der Überwachungskamera (101),
Bestimmen, auf Basis des Typs des Ereignisses und auf Basis des externen maximalen Leistungspegels (302) und auf Basis der bestimmten Menge von Energie im Energiespeicher (105), eines zweiten Verarbeitungsstatus, der einen Leistungspegel (309) erfordert, der höher ist als der maximale Leistungspegel (302), wobei das Bestimmen des zweiten Verarbeitungszustands ein Berechnen eines Zeitintervalls (307) für den zweiten Verarbeitungszustand durch Teilen der Menge Energie im Energiespeicher (105) durch die Differenz zwischen dem für den zweiten Verarbeitungszustand (309) erforderlichen Leistungspegel und dem externen maximalen Leistungspegel (302) aufweist, und
Verarbeiten von Bilddaten im zweiten Verarbeitungszustand.

8. Computerprogrammprodukt, ladbar in einen Speicher einer computerisierten Überwachungskamera, geeignet für das Ausführen der Schritte des Verfahrens nach einem der Ansprüche 1 bis 6.

## Revendications

1. Procédé pour commander une caméra de surveillance (101), la caméra de surveillance (101) étant reliée à une source de courant externe (102) ayant un niveau de courant maximal externe prédéterminé (302) connu de la caméra, de sorte que des données d'image sont traitées dans un premier état de traitement exigeant un niveau de courant (303, 305) qui est inférieur ou égal au niveau de courant maximal externe prédéterminé, le procédé comprenant :
la fourniture (201) d'énergie à un accumulateur d'énergie (105) à un niveau de courant correspondant à la différence entre le niveau de courant maximal externe (302) et le niveau de courant (303, 305) du premier état de traitement, et
la détection (202) d'un événement,
l'interruption (203) de la fourniture d'énergie à l'accumulateur d'énergie (105) en conséquence de la détection de l'événement,
la détermination (206) d'un type de l'événement détecté,
la détermination (208) d'une quantité d'énergie dans l'accumulateur d'énergie (105) dans la caméra de surveillance (101),
la détermination (210) en se basant sur le type de l'événement et en se basant sur le niveau de courant maximal externe (302) et en se basant sur la quantité déterminée d'énergie dans l'accumulateur d'énergie (105), un second état de traitement exigeant un niveau de courant (309) qui est plus élevé que le niveau de courant maximal externe (302), dans lequel la détermination du second état de traitement comprend le calcul (211) d'un intervalle de temps (307) pendant le second état de traitement en divisant la quantité d'énergie dans l'accumulateur d'énergie (105) par la différence entre le niveau de courant exigé pendant le second état de traitement (309) et le niveau de courant maximal externe (302), et
le traitement (212) de données d'image dans le second état de traitement.

2. Le procédé selon la revendication 1, dans lequel l'intervalle de temps (307) est basé sur le type de l'événement détecté.

3. Le procédé selon l'une quelconque des revendications 1 et 2, dans lequel la détection d'un événement comprend
la détection (204) d'un mouvement dans une scène sous surveillance.

4. Le procédé selon la revendication 3, dans lequel la détection de mouvement comprend
l'identification (205) d'un mouvement dans les données d'image.

5. Le procédé selon l'une quelconque des revendications 1 à 4, dans lequel la détermination du type d'un événement comprend
la détection (207) d'un type d'objet prédéterminé dans les données d'image.

6. Le procédé selon l'une quelconque des revendications 1 à 5, dans lequel le premier état de traitement comprend des données d'image de traitement selon n'importe quel premier :
fréquence des trames,
niveau de filtrage de bruit,
niveau de courbe des gammas,
niveau de netteté,
niveau de correction de couleur,
niveau de réduction d'artefact, et
dans lequel le second état de traitement comprend le traitement de données d'image selon n'importe quel second :
fréquence des trames,
niveau de filtrage de bruit,
niveau de courbe des gammas,
niveau de netteté,
niveau de correction de couleur,
niveau de réduction d'artefact, étant inférieur aux premiers taux et niveau correspondants.

7. Caméra de contrôle (101) configurée pour être reliée à une source de courant externe (102) ayant un niveau de courant maximal externe (302) prédéterminé connu de la caméra, configurée pour traiter des données d'image dans un premier état de traitement exigeant d'un niveau de courant (303, 305) qui est inférieur ou égal au niveau de courant maximal externe prédéterminé, la caméra de surveillance (101) comprenant des circuits (104, 106, 108, 110) configurés pour :
fournir de l'énergie à un accumulateur d'énergie (105) à un niveau de courant correspondant à la différence entre le niveau de courant maximal externe (302) et le niveau de courant (303, 305) du premier état de traitement
détecter un événement,
interrompre la fourniture d'énergie à l'accumulateur d'énergie (105) en conséquence de la détection de l'événement,
déterminer un type de l'événement détecté,
déterminer une quantité d'énergie dans l'accumulateur d'énergie (105) dans la caméra de surveillance (101),
déterminer en se basant sur le type de l'événement et en se basant sur le niveau de courant maximal externe (302) et en se basant sur la quantité déterminée d'énergie dans l'accumulateur d'énergie (105), un second état de traitement exigeant un niveau de courant (309), qui est plus élevé que le niveau de courant maximal externe (302), dans lequel la détermination du second état de traitement comprend le calcul d'un intervalle de temps (307) pendant le second état de traitement en divisant la quantité d'énergie dans l'accumulateur d'énergie (105) par la différence entre le niveau de courant exigé pendant le second état de traitement (309) et le niveau de courant maximal externe (302), et
traiter des données d'image dans le second état de traitement.

8. Produit formant programme informatique pouvant être chargé dans une mémoire d'une caméra de surveillance informatisée appropriée pour effectuer les étapes du procédé selon l'une quelconque des revendications 1 à 6.
